**Europäisches Patentamt**

**European Patent Office**

**Office européen des brevets**

(19)

(11) Publication number: **0 157 790
B1**

(12) **EUROPEAN PATENT SPECIFICATION**

(45) Date of publication of the patent specification:
**17.02.88**

(51) Int. Cl.⁴: **G 01 L 1/12,** G 01 L 5/13,
**A 01 B 63/112**

(21) Application number: **84903175.2**

(22) Date of filing: **01.08.84**

(86) International application number:
**PCT/FI 84/00055**

(87) International publication number:
**WO 85/01346 (28.03.85** Gazette 85/8)

(54) **MAGNETIC TRANSDUCER MEANS FOR MEASURING FORCE, IN PARTICULAR THE TRACTION RESISTANCE OF AN AGRICULTURAL TRACTOR.**

(30) Priority: **13.09.83 FI 833277**

(43) Date of publication of application:
**16.10.85 Bulletin 85/42**

(45) Publication of the grant of the patent:
**17.02.88 Bulletin 88/7**

(84) Designated Contracting States:
**AT BE CH DE FR GB LI LU NL SE**

(56) References cited:
**EP - A - 0 070 442
DE - A - 3 017 505
GB - A - 2 093 191
US - A - 3 814 188
US - A - 4 266 616**

(73) Proprietor: **Valmet Oy, Punanotkonkatu 2,
SF-00130 Helsinki 13 (FI)**

(72) Inventor: **HANNUKAINEN, Hannu, Tellervonkatu 14 B 14,
SF-40200 Jyväskylä (FI)**

(74) Representative: **Onn, Thorsten et al, AB Stockholms
Patentbyra Zacco & Bruhn P.O. Box 3129,
S-103 62 Stockholm (SE)**

ACTORUM AG

# Description

The present invention concerns a magnetic measuring means for measuring force, in particular the traction resistance of an agricultural tractor.

In mechanical engineering, force is a central calculation variable, and therefore the need to measure forces is amply encountered. Construction development is not the only field in which a need to measure force occurs: other instances that may be mentioned are force measuring components of control means aiming at optimized performance capacity, and the force-measuring parts of an overload guard or limiter.

It has been difficult, for practical reasons (size and shape), to fit the force transducer elements that are available to measure tensile or compressive forces in the pins, arms, or bars of constructions. The force transducer elements of prior art are most often based on the use of resistance strain gauges, which have a limited alternating load tolerance.

The range of application of the means of the invention lies, above all, in the realm of mechanical engineering. As an embodiment example shall in the following only be described the force transducer arrangements in the traction resistance control system of a tractor. The design to be presented transforms the force quantity into an electric signal which can be directly connected to an information-processing system, for instance a control circuit.

Agricultural tractors are commonly provided with a control system having the task to maintain the traction resistance or the position of the traction arms, or their combination, at the setpoint value. It is well known that in medium and large size tractors the measuring element in the system has been mechanical and has received its information from the traction arms. However, a mechanical arrangement has not yielded the best result with all work machine types that have to be considered. An electric system affords higher sensitivity and greater flexibility for adaptation of the system various needs. The general adoption in use of electric system has been delayed by lack of suitable force transducers. The object of the present invention is therefore to provide a new transducer design which is well suited to be used as traction resistance transducer element in the electro-hydraulic system of a tractor.

From EP-A1-0 070 442 is known a magnetic force transducer element, which is mounted on the journal pins of both traction arms. In this transducer or prior art, the tension force causes a shearing stress the size of which is electrically measured.

A specific object of the present invention is to provide a magnetic force transducer element with good measuring accuracy and simple and inexpensive structure. It is a further object to provide a force transducer element which can be advantageously connected to the three-point linkage of a tractor in a way providing good protection of the transducer and of the electronic unit therewith associated.

This is achieved with a magnetic measuring means according to claim 1.

In the following, the invention is described in detail, reference being made to an embodiment example of the invention presented in the figure of the attached drawing, to the details of which the invention is not confined.

Fig. 1 presents in elevational view a tractor's three-point linkage, in conjunction of which the force measuring means of the invention has been applied.

Fig. 2 shows the same as Fig. 1, in rear view.

Fig. 3 shows the section III-III of Fig. 2, that is, an axial section of a flexural bar inside which the magnetic transducer means of the invention has been disposed.

Figs. 4 and 5 show the section V-V in Fig. 3.

Fig. 6 presents the electronic unit used in association with the transducer of the invention.

Fig. 7 displays the output voltage $V_{out}$ obtained from the electronic unit, as a function of the force F that is being measured.

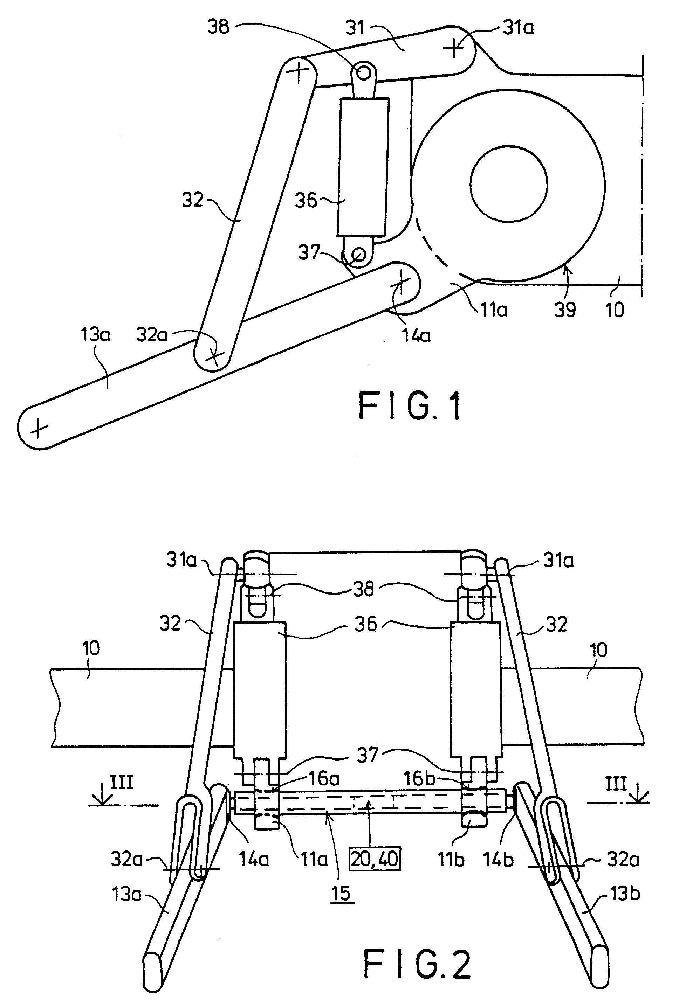

In Figs. 1 and 2, the frame of a tractor, which is an agricultural tractor, is indicated by reference numeral 10. On the rear part of the frame 10 has been mounted a three-point linkage, known in itself in the art, comprising lifting arms 31 connected by means of a shaft with a lifting cylinder. The lifting arms 31, of which there are two parallel, have been connected to the lifting rods 31 which have in turn been joined by pivots 32a to the traction arms 13a, 13b, of the tractor's three-point linkage. The traction arms 13a, 13b have at their inner ends been attached by means of pivots 14a, 14b to the shaft 15 serving as flexural bar of a traction resistance sensing means according to the present invention. The shaft 15 is close to either end by the aid of receptacle sleeves 16a, 16b attached in lugs 11a, 11b on the tractor frame 10, these lugs being integral parts of the tractor frame 10.

The lifting means depicted in Figs. 1 and 2 is provided with external lifting cylinders 36, two in parallel and at their lower ends connected by pivots 37 to the same lugs 11a, 11b on the frame 10 as the sensing shaft 15 mentioned above. The piston rods of the lifting cylinders 36 are by pivots 38 connected to the lifting arms 31, carried in the frame 10 by shafts 31a, 31b. In Fig. 1, the axle tubes of the tractor's rear wheels have been indicated by numeral 39.

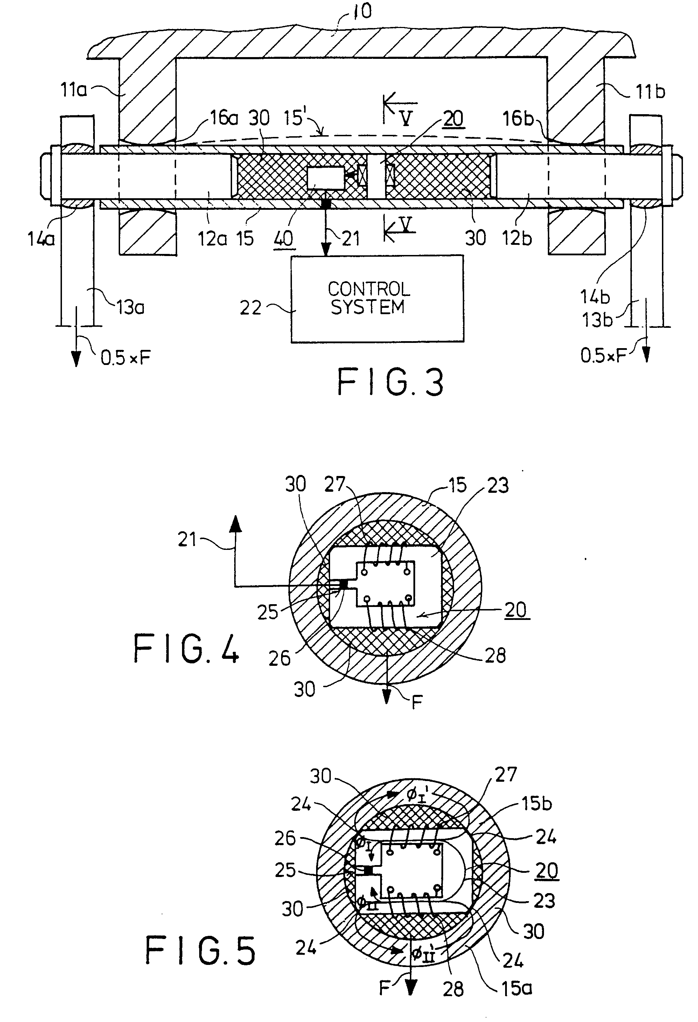

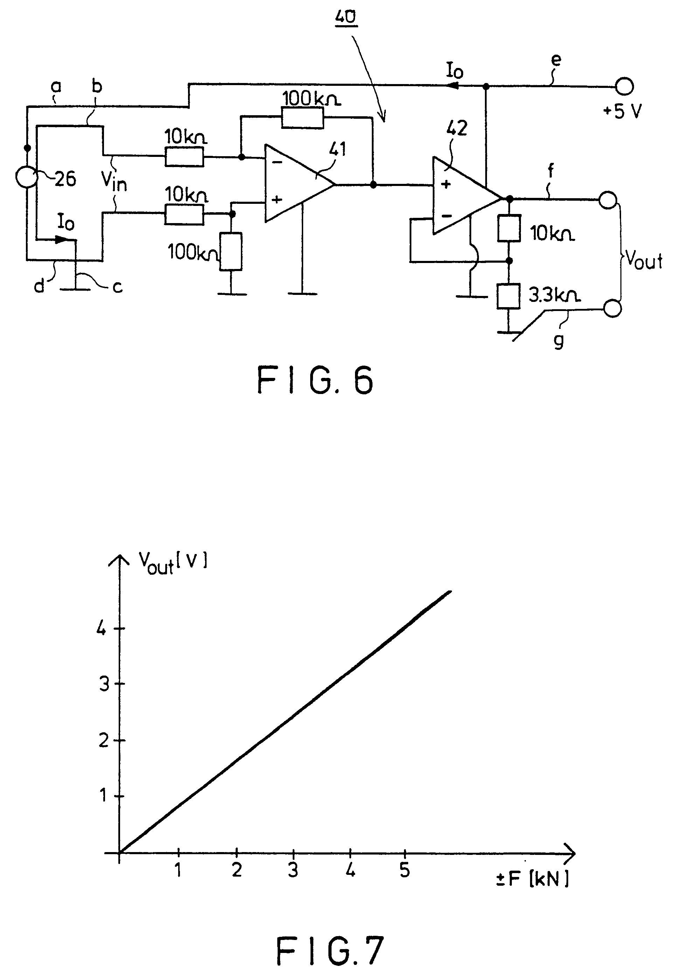

Fig. 4 presents the internal structure of the magnetic transducer 20. The tubular flexural bar 15 consists of magnetic material, the relative permeability $\mu_r$ of which may vary most advantageously in the range 100 to 1000. In the bar 15, an iron core 23 made of magnetically soft material has been built in, and on this core coils 27 and 28 have been wound. The gauge of the wire used in making the coils 27 and 28 may vary e.g. in the range 0.15 to 0.8 mm. The number of the turns in the coils 27, 28 may vary most appropriately in the range 20 to 100. The coils 27, 28 may be called exciting coils, and their function is to generate a magnetic flux, the course of which will be elucidated later on. The iron core 23 is in cross-section (V-V in Fig. 3) e.g. shaped like a rectangular ring. The breadth of the iron core 23 is in practice e.g. about 10 to 15 mm. The corners 24 of the iron core 23 have been rounded to establish good magnetic contact of these corners 24 with the inner surface of the bar 15. In the iron core 23, an air gap 26 of about 0.2 to 0.5 mm has been cut, in which an element 26 sensitive to the changes of the magnetic flux density B is inserted. The element 26 may be, for instance, a four-pin (pins a, b, c, d in Fig. 6) Hall element, current input and voltage output lying on its pin. The exciting coils 27 and 28 are wound on opposed legs of the iron core 23.

Fig. 5 illustrates the course of the magnetic flux in the plane of the cross-section V-V of Fig. 3. The fluxes have been excited by d.c. and a.c. signals supplied to the coils 27 and 28, supplied from the same source (not depicted). The coils 27, 28 may most appropriately be connected in series when one exciter is used. The total reluctance of excitation is then constant at all time because equal but opposite changes of reluctance take place on opposite sides of the tubular bar 15. The flux $\phi_I + \phi_I'$ excited by the coil 27 and flux $\phi_{II} + \phi_{II}'$ is similarly excited by the coil 28. The magnetic materials (the bar 15 and the iron core 23) and the air gap 25 are so selected the the fluxes $\phi_I + \phi_{II}$ are substantially equal and opposite and therefore cancel out each other when the bar 15 is in an unloaded and unflexed state. In the formula of the magnetic flux, the direct relationship of the flux

$$\phi = \frac{NI\mu A}{\ell} \qquad (1)$$

with the excitation current I and the magnetic permeability ($\mu = \mu_r\mu_0$) is seen. In the formula (1), N is the number of turns and A the sectional area of the iron core 23, and $\ell$ its length.

The effect of the lifting arm forces F on the permeability of the material of the bar 15 is that owing to the stress states caused in the material by the force F of the permeability $\mu$ changes. $\mu$ changes so that, in Fig. 5, in the lower part 15a of the bar 15 it decreases owing to the state of compressive stress, while correspondingly increasing in the upper part 15b owing to the state of tensile stress, based on physical phenomena given in themselves.

The magnetic flux density B produced by the flux $\phi$ is a function of $\mu$ as follows.

$$B = \phi/A = \frac{NI\mu}{\ell} \qquad (2)$$

The flux B prevailing in the measuring air gap 25 is thus understood to change as a function of the force F to be measured. The B-sensitive element 26 placed in the measuring air gap 25 measures the net value of the flux density B passing therethrough. When no force is acting on the bar 15, the value of B is zero $\phi_I = \phi_{II}$. When a force F is active, the net value of B assumes a value different from zero because the changes of $\mu$ in the upper and lower parts 15a, 15b of the bar cause the relation between $\phi$ and $\phi'$ to change in such manner that when the force F is directed downwards $\phi_I'$ increases and $\phi_I$ decreases, and correspondingly $\phi'$ decreases and $\phi_{II}$ increases. Therefore, the net value of B in the measuring air gap 25 assumes a value different from zero. When the direction of the force F is upwards (considering Fig. 3) the direction of these phenomena is reversed. It is thus inderstood that the transducer 20 is bidirectionally acting, and the forces in the arms 13a, 13b may be tension or compression forces.

Measuring the net field density B brings the advantage that the temperature dependance is largely self-compensating.

The transducer 20 has been placed, as shown in Figs. 3, 4 and 5, inside the tubular flexural bar 15. The transducer means 20 has been embedded inside the bar 15 in protection by a suitably elastic compound 30 so as to exclude any influence of moisture or corrosion on the iron parts. The transducer means 20 and its electronic unit 40 have in a manner known in itself in the art been connected by the lead 21 to a control system 22 or an equivalent means by which the traction resistance is indicated. It goes without saying that an electric lead (not depicted) runs to the transducer means 20, through which the exciting coils 27 and 28 are energized.

In Fig. 3, dotted lines 15' indicate the loaded position of the tube 15 serving as flexural bar, to which position the pipe 15 has been bent because of the forces F acting in the traction arms 13a, 13b.

As shown in Figs. 2, 3, 4 and 5, the magnetic transducer means of the invention and its electronic unit 40, the more detailed embodiment of which is apparent in Fig. 6, may be placed advantageously in protected location inside the flexural bar 15 and they may be immersed in an elastic, protectiv compound 30, whereby the units 20 and 40 will not be exposed to mechanical impact or impurities, their operation being trouble-free over prolonged periods. In Fig. 3, to the ends of the tubular part 15 have been attached journal pins 12a und 12b which between them leave a free space for the units 20 and 40. To the ends of the journal pins 12a and 12b, the traction arms 13a, 13b have been connected by means of ball joints 14a, 14b.

In the following is described, in the first place referring to Fig. 6, an embodiment example of the electronic unit 40 connected to the transducer. As is well known, the Hall element 26 is a current-drawing entity, and it is supplied with current $I_o$ through the lead e from the +5 V terminal. The current $I_o$ is on the order of 5 mA. The other terminal c of the current supply has been earthed. From the terminals b and d of the Hall element the voltage $V_{in}$ is obtained, which is on the order of 10 mV only. Therefore, the voltage $V_{in}$ has to be considerably amplified to be usable towards the purposes implied in the invention. In Fig. 6 is presented an advantageous amplifier connection employing two cascade-connected operation amplifiers 41 and 42, the first amplifier being differentially connected. The other operation amplifier 42 is non-inverting. The gain $V_{out}/V_{in}$ in this circuit is on the order of 30 to 45.

From the terminals f and g, the output voltage $V_{out}$ of the transducer is obtained, this voltage being, as is apparent in Fig. 7, in the range 0-5 V when the total force $\pm$ F to measured is in the range about 0-6 kN. Since the input voltage $V_{in}$ obtained from the Hall element 26 is rather low of its level, the electronic unit 40 has been placed, as taught by the invention, in immediate conjunction with the magnetic transducer 20, inside the bar 15, as shown in Fig. 3. In this way the electronic unit 40 is mechanically protected, and external electric interference can be adequately avoided.

In the foregoing is presented only one application example of the invention, and in practical implementations the details may vary even in very many respects. The measuring principle of the invention is not, for instance, bound to the shape of the iron core 23, the positioning of the coils 27, 28, or their number. There may be more than two exciting coils 27, 28 for increasing the sensitivity, depending in each instance on the application.

In the following are presented the claims, within the scope of the inventive idea defined by which various details of the invention may vary.

### Claims

1. A magnetic measuring means for measuring force, in particular the traction resistance of an agricultural tractor, said means comprising a tubular bar (15) on which acts the force (F) to be measured, most advantageously on its both ends, causing a deflection of said bar (15), said bar (15), or part of it, being made of a material with good magnetic conductivity, inside said bar (15) there being disposed an iron core (23) which is in magnetic contact with said bar (15), in conjunction with said iron core (23) being provided at least two, most advantageously series-connected, exciting coils (27, 28) said iron core (23) being provided with a measuring air gap (25) in which a transducer element (26), such as a Hall element, detecting the magnetic flux density has been inserted, and the magnetic fluxes produced by said exciting coils (27, 28) being arranged to close, on one hand, through said iron core (23) and its measuring air gap (25) and on the other hand through the opposite sides (15a, 15b) of said bar (15) in such manner that on said side with tensile stress the magnetic flux increases, and on said side of compression stress the magnetic flux correspondingly decreases, said changes of flux being detected according to the principle of magnetic bridge measurement, based on the changes of the flux passing through the measuring air gap (25).

2. Means according to claim 1, characterized in that said iron core (23) is in the plane of the cross-section (V-V) of said bar (15) shaped like a rectangular ring, and that in one leg of the iron core (23) is provided the measuring air gap (25) in which is inserted the transducer element (26), such as a Hall element, measuring the magnetic flux density, and that the corner parts (24) of said iron core (23) have been disposed with magnetically conducting contact against the inner surface of the bar (15), and that said measuring air gap (25) is substantially perpendicular against the direction of the force (F) to be measured.

3. Means according to claim 1 or 2, characterized in that an electronic unit (40) has been disposed inside said bar (15) in the immediate vicinity of said iron core (23).

4. Means according to any one of claims 1 - 3, characterized in that it is covered and protected by an elastic protective compound (30).

5. Means according to claim 3 or claims 4 and 3, characterized in that the electronic component (40) comprises an amplifier circuit containing at least two consecutive amplifying stages (41, 42); that the first (41) of said amplifying stages, which is preferably an operation amplifier, has been connected to be a differential amplifier.

### Patentansprüche

1. Magnetische Messvorrichtung zur Messung von Kraft, insbesondere den Zugwiderstand eines landwirtschaftlichen Schleppers, welche Vorrichtung einen röhrenförmigen Stab (15) umfasst, worauf die zu messende Kraft (F), vorzugsweise beiderseitig dieses, wirkt und eine Durchbiegung des erwähnten Stabs (15) verursacht, welcher Stab (15) oder ein Teil davon aus einem Material mit guter magnetischer Leitfähigkeit gemacht ist, wobei innerhalb des erwähnten Stabs (15) ein Eisenkern (23) vorhanden ist, der in magnetischer Verbindung mit dem erwähnten Stabe (15) ist, wobei mit dem erwähnten Eisenkern (23) mindestens zwei, vorzugsweise hintereinandergeschaltete Feldspulen (27, 28) in Verbindung sind, wobei der erwähnte Eisenkern (23) mit einem Messluftloch (25) versehen ist, worin ein Transducerelement (26), z.B. ein Hallelement, eingesetzt ist, das die magnetische Flussdichte zeigt, und dass die von den Feldspulen (27, 28) erzeugten Magnetflüsse angeordnet sind, einerseits via den Eisenkern (23) und dessen Messluftloch (25) und andererseits via die entgegengesetzten Seiten (15a, 15b) des erwähnten Stabs (15) derart geschlossen zu werden, dass der Magnetfluss auf der erwähnten Zugspannungsseite erhöht wird und auf der erwähnten Druckspannungsseite analog vermindert wird, welche Flussänderungen gemäss dem Prinzip von magnetischer Brückenmessung detektiert werden, welche sich auf Veränderungen im Flusse durch das Messluftloch (25) basiert.

2. Vorrichtung nach Anspruch 1, dadurch gekennzeichnet, dass der erwähnte Eisenkern (23) in der Querschnittebene (V-V) des erwähnten Stabs (15) die Form eines rechtwinkeligen Rings hat, dass in einem Zweig des Eisenkerns (23) das Messluftloch (25), worin das Transducerelement (26), z.B. ein Hallelement, eingesetzt ist, das die magnetische Flussdichte misst, vorgesehen ist, dass die Eckenteile (24) des erwähnten Eisenkerns (23) mit magnetisch leitendem Kontakt gegen die Innenfläche des Stabs (15) angeordnet worden sind, und dass das erwähnte Messluftloch (25) wesentlich winkelrecht zur Richtung der Kraft (F) angeordnet ist, die gemessen werden soll.

3. Vorrichtung nach Anspruch 1 oder 2, dadurch gekennzeichnet, dass eine elektronische Einheit (40) innerhalb des erwähnten Stabs (15) in der unmittelbaren Nähe des erwähnten Eisenkerns (23) angeordnet worden ist.

4. Vorrichtung nach einem der Ansprüche 1 - 3, dadurch gekennzeichnet, dass sie von einer elastischen, schützenden Verbindung (30) gedeckt und geschützt wird.

5. Vorrichtung nach Anspruch 3 oder den Ansprüchen 4 und 3, dadurch gekennzeichnet, dass der Elektronikteil (40) eine Verstärkerschaltung umfasst, die mindestens zwei aufeinanderfolgende Verstärkungsstufen (41, 42) hat, und dass die erste (41) der erwähnten Verstärkungsstufen, die vorzugsweise ein Operationsverstärker ist, derart geschaltet ist, dass sie ein Differentialverstärker wird.

## Revendications

1. Dispositif magnétique pour mesurer une force, en particulier la résistance à la traction d'un tracteur agricole, ledit dispositif comprenant une barre tubulaire (15) sur laquelle agit la force (F) à mesurer, de préférence sur ses deux extrémités, amenant ainsi un fléchissement de ladite barre (15) réalisée toute entière ou en partie en une matière présentant une bonne conductivité magnétique, un noyau de fer (23) étant disposé à l'intérieur de ladite barre (15) de manière à être en contact magnétique avec celle-ci, au moins deux bobines inductrices (27, 28), de préférence montées en série, étant disposées en conjonction avec ledit noyau de fer (23) qui comporte un entrefer de mesure (25) dans lequel a été inséré un élément transducteur (26), tel qu'un élément à effet Hall, détectant la densité du flux magnétique, les flux magnétiques créés par lesdites bobines inductrices (27, 28) étant prévus pour se fermer, d'une part, par ledit noyau de fer (23) et son entrefer de mesure (25) et, d'autre part, par les côtés opposés (15a, 15b) de ladite barre (15) de manière que sur ledit côté à contrainte de traction, le flux magnétique augmente et que, sur ledit côté à contrainte de compression, le flux magnétique diminue de façon correspondante, lesdites variations du flux étant détectées selon le principe de mesure à pont magnétique, sur la base des variations du flux passant par l'entrefer de mesure (25).

2. Dispositif selon la revendication 1, caractérisé en ce que ledit noyau de fer (23) présente la forme d'une bague rectangulaire dans le plan de la section transversale (V-V) de ladite barre (15), qu'une branche du noyau de fer (23) comporte l'entrefer de mesure (25) dans lequel est inséré l'élément transducteur (26), tel qu'un élément à effet Hall, mesurant la densité du flux magnétique, que les parties des coins (24) dudit noyau de fer (23) sont disposées pour assurer leur contact de conductibilité magnétique contre la surface intérieure de la barre (15) et que ledit entrefer de mesure (25) est sensiblement perpendiculaire à la direction de la force (F) à mesurer.

3. Dispositif selon l'une des revendications 1 et 2, caractérisé en ce qu'un ensemble électronique (40) est disposé à l'intérieur de ladite barre (15) et dans le voisinage immédiat dudit noyau de fer (23).

4. Dispositif selon une quelconque des revendications 1 à 3, caractérisé en ce qu'il est recouvert et protégé par une masse protectrice élastique (30).

5. Dispositif selon la revendication 3 ou les revendications 4 et 3, caractérisé en ce que l'ensemble électronique (40) comprend un circuit amplificateur comportant au moins deux étages d'amplification consécutifs (41, 42) et que le premier (41) desdits étages d'amplification, constitué de préférence par un amplificateur opérationnel, a été monté pour être un amplificateur différentiel.

F I G.1

F I G.2

0 157 790

FIG.3

CONTROL SYSTEM

FIG.4

FIG.5

F I G. 6

F I G. 7